(19) **Europäisches Patentamt**
**European Patent Office**
**Office européen des brevets**

(11) **EP 3 846 084 A1**

(12) **EUROPEAN PATENT APPLICATION**

(43) Date of publication:
**07.07.2021 Bulletin 2021/27**

(51) Int Cl.:
*G06N 3/04* *(2006.01)*

(21) Application number: **20195099.5**

(22) Date of filing: **08.09.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **06.01.2020 JP 2020000148**

(71) Applicant: **Kabushiki Kaisha Toshiba**
**Minato-ku**
**Tokyo (JP)**

(72) Inventor: **NODA, Reiko**
**Tokyo (JP)**

(74) Representative: **Moreland, David**
**Marks & Clerk LLP**
**Aurora**
**120 Bothwell Street**
**Glasgow G2 7JS (GB)**

(54) **LEARNING DEVICE, LEARNING METHOD, AND COMPUTER-READABLE MEDIUM**

(57) An according to an arrangement, a learning device (1) includes an inference unit (13), a translation unit (12), a first update unit (141), and a second update unit (142). The inference unit (13) performs an inference task by using a first neural network (101a, 101b). The translation unit (12) translates second domain data into first translated data by using a second neural network (102). The first update unit (141) updates parameters of the second neural network so that a distribution that represents a feature of the first translated data approaches a distribution that represents a feature of the first domain data. The second update unit (142) updates parameters of the first neural network (101a, 101b) based on a second inference result output when the first translated data is input into the first neural network, a ground truth label of the first translated data, the first inference result, and a ground truth label of the first domain data.

**FIG.3**

**Description**

FIELD

The present disclosure relates to a learning device, a learning method, and a computer-readable medium.

BACKGROUND

Techniques of generating learning data used for machine learning, such as a neural network that performs estimation, such as class classification, object detection, position regression, and the like, have been known. For example, a technique of generating data similar to learning data by using deep learning, such as a variational autoencoder (VAE), an adversarial network (GAN), or the like, is used to increase learning data or is substituted for learning data.

However, it has been difficult for conventional devices to generate learning data that is appropriate for improvement in generalization performance of a neural network used for estimation.

BRIEF DESCRIPTION OF THE DRAWINGS

FIG. 1 is a drawing that illustrates an example of a function configuration of a learning device according to a first arrangement;
FIG. 2 is a diagram that illustrates a configuration example of neural networks according to the first arrangement;
FIG. 3 is a flowchart that illustrates an example of a learning method according to the first arrangement;
FIG. 4 is a diagram that illustrates a configuration example of neural networks according to a second arrangement;
FIG. 5 is a flowchart that illustrates an example of a learning method according to the second arrangement;
FIG. 6 is a diagram that illustrates a configuration example of neural networks according to a variation of the second arrangement;
FIG. 7 is a diagram that illustrates a configuration example of neural networks according to a third arrangement;
FIG. 8 is a flowchart that illustrates an example of a learning method according to the third arrangement;
FIG. 9 is a diagram that illustrates a configuration example of neural networks according to a fourth arrangement; and
FIG. 10 is a flowchart that illustrates an example of a learning method according to the fourth arrangement.

DETAILED DESCRIPTION

According to an arrangement, the learning device includes an inference unit, a translation unit, a first update unit, and a second update unit. The inference unit is configured to perform an inference task by using a first neural network, the first neural network being configured to receive first domain data and output a first inference result. The translation unit is configured to translate second domain data into first translated data similar to the first domain data by using a second neural network, the second neural network being configured to receive the second domain data and translate the second domain data into the first translated data. The first update unit is configured to update parameters of the second neural network so that a distribution that represents a feature of the first translated data approaches a distribution that represents a feature of the first domain data. The second update unit is configured to update parameters of the first neural network on a basis of a second inference result output when the first translated data is input into the first neural network, a ground truth label of the first translated data, the first inference result, and a ground truth label of the first domain data.

Hereinafter, arrangements of learning devices, learning methods, and programs will be described in detail with reference to the accompanying drawings.

First Arrangement

A learning device according to a first arrangement is a device that learns a first neural network. The first neural network receives input of first domain data, such as images, and performs an inference task. The inference task includes, for example, a process of identifying what kind of object a subject in an image is, a process of estimating a position, in an image, of an object in the image, a process of estimating a label of each pixel in an image, a process of regression of positions of features of an object, and the like.

Note that an inference task performed by the first neural network is not limited to the above example, but may include any task that can be inferred by a neural network.

Input into the first neural network, that is to say the first domain data, is not limited to images. The first domain data may include any data that can be input into the first neural network and can be calculated by the first neural network. The first domain data may include, for example, sounds, texts, or moving images, or a combination of any of sounds, texts, and moving images.

A case will be described as an example. In the case, input into the first neural network includes images in front of a vehicle that are captured by a camera attached to the vehicle, and the learning device gives a learning in an inference task that estimates orientations of other vehicles in the images.

To learn such an inference task, the learning device according to the first arrangement stores images (first domain data) preliminarily captured by the camera attached to the vehicle, and ground truth label data. For example, the ground truth label represents a rectangle circumscribed around a vehicle in an image, and represents positions, in the image, of some vertexes of a cuboid circumscribed around the vehicle.

Further, the learning device according to the first arrangement further learns a second neural network to improve generalization performance due to the learning of the first neural network using the first domain data. The second neural network translates second domain data into data similar to the first domain data (data like the first domain data).

The second domain data includes, for example, computer graphics (CGs). A plurality of CG images for learning are automatically generated. Further, a ground truth label of a CG image for learning is not taught by humans but is automatically generated. The ground truth label of a CG image for learning, for example, represents a rectangle circumscribed around a vehicle in the image, and represents positions, in the image, of some vertexes of a cuboid circumscribed around the vehicle.

CG images for learning (second domain data) generated as described above, and a ground truth label that correspond to the CG images for learning are stored in the learning device according to the first arrangement.

Note that the second domain data is not limited to CGs. The second domain data and the ground truth label of the second domain data may be any combination of data and ground truth data that can be used to increase the first domain data or can be substituted for the first domain data. The second domain data may include, for example, image data, or text data defined using words.

Some data contained in the ground truth label of the first domain data may not be contained in the ground truth label of the second domain data. Alternatively, some data contained in the ground truth label of the second domain data may not be contained in the ground truth label of the first domain data.

Further, if the second neural network generates, from a ground truth label of first domain data, data that corresponds to the first domain data, the second neural network may not prepare a ground truth label of second domain data (the ground truth label of the second domain data may be the same as the ground truth label of the first domain data).

The second neural network may be any neural network that can translate second domain data into data similar to first domain data. On the basis of a format of second domain data and a format of first domain data, the most appropriate translation technique may be applied to the second neural network. A translation technique applied to the second neural network is, for example, CycleGAN (Jun-Yan Zhu, Taesung Park, Phillip Isola, Alexei A. Efros, "Unpaired Image-to-Image Translation using Cycle-Consistent Adversarial Networks" ICCV 2017), DCGAN (A. Radford, L. Metz, and S. Chintala. Unsupervised representation learning with deep convolutional generative adversarial networks. In ICLR, 2016), Pix2Pix (Phillip Isola, Jun-Yan Zhu, Tinghui Zhou, Alexei A. Efros, University of California, Berkeley, "Image-to-Image Translation with Conditional Adversarial Nets, " CVPR2017), or the like.

Configuration Example

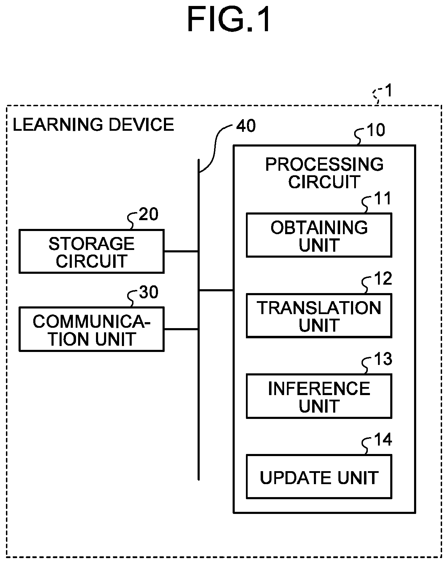

FIG. 1 is a block diagram that illustrates a configuration example of a learning device 1 according to the first arrangement. The learning device 1 includes, for example, a dedicated or general-purpose computer. As illustrated in FIG. 1, the learning device 1 according to the first arrangement includes a processing circuit 10, a storage circuit 20, a communication unit 30, and a bus 40 that connects the processing circuit 10, the storage circuit 20, and the communication unit 30 with each other.

The processing circuit 10 includes an obtaining unit 11, a translation unit 12, an inference unit 13, and an update unit 14. Processes by each of the units will be specifically described below. Note that FIG. 1 illustrates main functional blocks related to the first arrangement, and functions of the processing circuit 10 are not limited to the functional blocks.

Processes of each of the functions performed by the learning device 1 are stored, for example, in the storage circuit 20, in the form of programs performed by the computer. The processing circuit 10 includes a processor that reads programs from the storage circuit 20 and performs the programs, and thus implements a function that corresponds to each of the programs. The processing circuit 10 that has read each of the programs includes each of the functional blocks illustrated in FIG. 1.

Note that although in FIG. 1, the single processing circuit 10 implements each of the functional blocks, a combination of a plurality of separate processors may constitute the processing circuit 10. In this case, each of processing functions may be implemented as a program, or a particular function may be implemented in a dedicated separate circuit that executes programs.

The above "processor" includes, for example, a general-purpose processor, such as a central processing unit (CPU), a graphical processing unit (GPU), or the like, or a circuit, such as an application specific integrated circuit (ASIC), a programmable logic device (for example, a simple programmable logic device (SPLD), a complex programmable logic device (CPLD), a field programmable gate array (FPGA)) or the like.

The processor implements functions by reading and executing programs stored in the storage circuit 20. Note that programs may not be stored in the storage circuit 20, but may be directly built into a circuit of the processor. In this case, the processor implements functions by reading and executing programs built into the circuit.

The storage circuit 20 stores, as necessary, data and the like related to each of the functional blocks of the processing circuit 10. The storage circuit 20 according to the first arrangement stores programs, and data used for various processes. The storage circuit 20 includes, for example, random access memory (RAM), a semiconductor memory device, such as flash memory, a hard disk, an optical disc, or the like. Alternatively, the storage circuit 20 may be substituted with a storage device outside the learning device 1. The storage circuit 20 may include a storage medium that stores or transitorily stores programs downloaded through a local area network (LAN), the Internet, or the like. Further, the number of the storage medium is not limited to one but may be plural.

First domain data, a ground truth label for the first domain data, second domain data, and a ground truth label for the second domain data that are used for learning may be preliminarily stored in the storage circuit. Alternatively, first domain data, a ground truth label for the first domain data, second domain data, and a ground truth label for the second domain data that are used for learning may be preliminarily stored in a device, such as another server. Further, part of the first domain data, the ground truth label for the first domain data, the second domain data, and the ground truth label for the second domain data that are stored in the device, such as another server, may be read through a LAN or the like to be stored in the storage circuit.

The communication unit 30 includes an interface that performs input and output of information between the communication unit 30 and external devices connected with the communication unit 30 through wired or wireless connection. The communication unit 30 may perform communication through a network.

Next, processes of each of the functional blocks of the processing circuit 10 will be described.

The obtaining unit 11 reads first domain data and a ground truth label of the first domain data from the storage circuit 20 as learning data. Further, the obtaining unit 11 reads second domain data and a ground truth label of the second domain data from the storage circuit 20 as learning data.

The translation unit 12 uses a neural network to receive the second domain data, and to translate the second domain data into first translated data similar to the first domain data. Note that details of a configuration of the neural network used for the translation will be described below.

The inference unit 13 inputs the learning data that has been read by the obtaining unit 11 into a neural network that is an object of the learning. Further, the inference unit 13 calculates output from the neural network into which the learning data has been input. Note that details of a configuration of the neural network that is an object of the learning will be described below.

The update unit 14 updates parameters of the neural networks on the basis of the output calculated by the inference unit 13, and the learning data read by the obtaining unit 11 (the ground truth label of the first domain data or the ground truth label of the second domain data). Note that details of the update method will be described below.

Configuration Example of Neural Networks

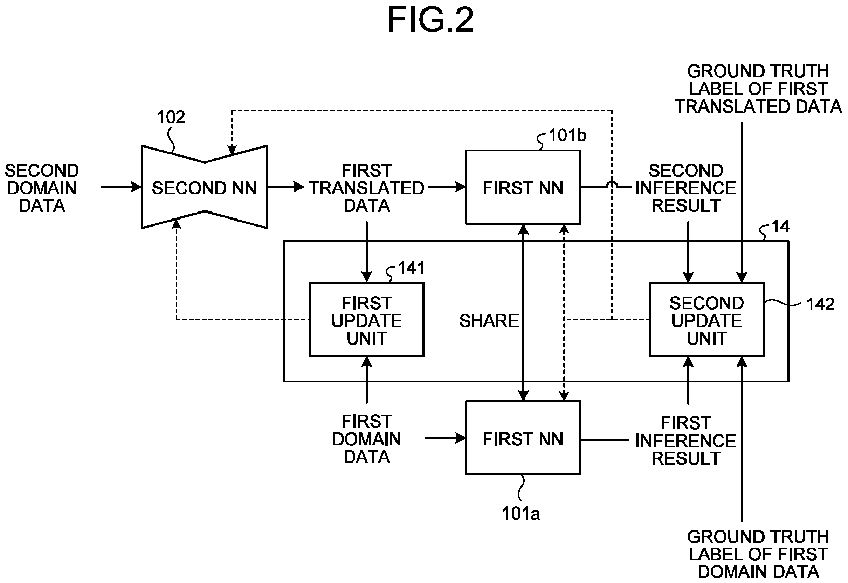

FIG. 2 is a diagram that illustrates a configuration example of neural networks according to the first arrangement. In the example in FIG. 2, actual images are used as first domain data, and CGs are used as second domain data.

The first and second domain data may include RGB color images, or color images with converted color spaces (for example, YUV color images). Alternatively, the first and second domain data may include one-channel images that are obtained by converting color images into monochrome images. Alternatively, the first and second domain data may not include unprocessed images but may include, for example, RGB color images from which a mean value of pixel values of each channel is subtracted. Alternatively, the first and second domain data may include, for example, normalized images. The normalized images may have, for example, pixel values of each pixel that are in a range from zero to one or a range from minus one to one. The normalization includes, for example, subtracting a mean value from a pixel value of each pixel, and then dividing each of the pixel values by a variance or by a dynamic range of the pixel values of an image.

As illustrated in FIG. 2, if a first neural network (hereinafter, a "neural network" is designated by "NN" in the drawings) 101a receives input of the first domain data, the first neural network 101a outputs a first inference result.

If a second neural network 102 receives input of the second domain data, the second neural network 102 translates the second domain data into first translated data similar to the first domain data, and outputs the first translated data.

If a first neural network 101b receives input of the first translated data, the first neural network 101b outputs a second inference result. Note that at least part or all of parameters (weights) of the first neural network 101b are shared with the first neural network 101a (hereinafter, "share" is designated by "share" in the drawings). If all parameters (weights) are shared between the first neural networks 101a and 101b, the first neural networks 101a and 101b are implemented as one first neural network 101.

The first neural networks 101a and 101b are used by the above inference unit 13 that performs inference tasks. The second neural network 102 is used by the above translation unit 12.

Parameters of the first neural networks 101a and 101b and the second neural network 102 are updated by the update unit 14. The update unit 14 includes a first update unit 141 and a second update unit 142.

The first update unit 141 receives the first domain data from the first neural network 101a. Then the first update unit 141 updates the parameters of the second neural network 102 so that a distribution that represents features of the first translated data becomes similar to a distribution that represents features of the first domain data.

The second update unit 142 receives the second inference result from the first neural network 101b, receives a ground truth label of the first translated data from the obtaining unit 11, receives the first inference result from the first neural network 101a, and receives a ground truth label of the first domain data from the obtaining unit 11.

Then the second update unit 142 updates the parameters of the first neural networks 101a and 101b on the basis of the second inference result, the ground truth label of the first translated data, the first inference result, and the ground truth label of the first domain data.

More specifically, the second update unit 142 calculates a loss Lreal from a difference between the first inference result and the ground truth label of the first domain data. Similarly, the second update unit 142 calculates a loss Lfake from a difference between the second inference result and the ground truth label of the first translated data. Then the second update unit 142 uses following Expression (1) to determine a loss L by adding a weighted Lreal and a weighted $L_{fake}$.

$$L = a * L_{real} + b * L_{fake} \tag{1}$$

where a and b are predetermined constants.

Then the second update unit 142 updates the parameters of the first neural networks 101a and 101b so that the loss L becomes minimum.

Note that a method for updating parameters of the first neural networks 101a and 101b is not limited to the method described herein, but may be any method for making output of the first neural networks 101a and 101b closer to the ground truth labels of the first and second domain data.

Alternatively, the loss may be calculated by any loss calculation method as long as the loss is allowed to retroact to the neural networks and update parameters. A loss calculation method that corresponds to a task may be selected. For example, class classification, such as SoftmaxCrossEntropyLoss, or regression, such as L1Loss or L2Loss, may be selected as a loss calculation method. Further, the above constants a and b are appropriately varied according to a degree of progress of the learning.

Further, the second update unit 142 updates the parameters of the second neural network 102 on the basis of the second inference result, the ground truth label of the first translated data, the first inference result, and the ground truth label of the first domain data. More specifically, the second update unit 142 updates the parameters of the second neural network 102 so that the loss L becomes minimum.

Example of Learning Method

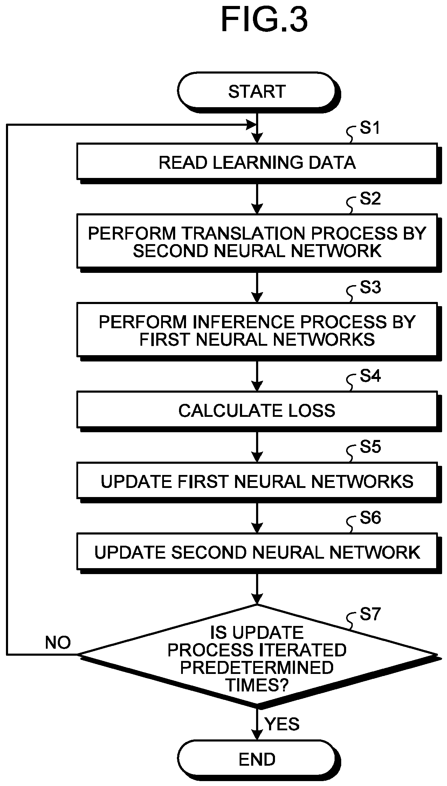

FIG. 3 is a flowchart that illustrates an example of a learning method according to the first arrangement. First, the obtaining unit 11 reads, from the storage circuit 20, learning data (first domain data, a ground truth label of the first domain data, second domain data, and a ground truth label of the second domain data) (Step S1).

For example, when the first domain data is actual images and the second domain data is CGs, the obtaining unit 11 may read the actual images and ground truth labels therefor one by one, and may read the CGs and ground truth labels therefor one by one. Alternatively, the obtaining unit 11 may read, for example, a set of the actual images and ground truth labels therefor, and a set of the CGs and ground truth labels therefor. Herein, the set means the actual images and the ground truth labels therefor or the CGs and the ground truth labels therefor of two by two, four by four, eight by eight, or the like, for example. Alternatively, for example, the number of pieces of the first domain data read by the obtaining unit 11 may be different from the number of pieces of the second domain data read by the obtaining unit 11.

Hereinafter, such set of input (a unit of data that is processed at a time) may be referred to as a batch. Further, the number of parameter update processes for one input batch may be referred to as an iteration number.

Next, the translation unit 12 uses the second neural network 102 to perform a translation process (Step S2). More specifically, the translation unit 12 inputs the second domain data in the read batch into the second neural network 102 to generate first translated data.

Next, the inference unit 13 uses the first neural networks 101a and 101b to perform an inference process (Step S3). The first domain data in the read batch is input into the first neural network 101a. The first translated data that has been obtained in the process in Step S2 is input into the first neural network 101b.

Next, a loss defined by above Expression (1) is calculated by the second update unit 142 on the basis of results of the processes in Step S2 and Step S3 (Step S4).

Next, the second update unit 142 updates the first neural networks 101a and 101b on the basis of the loss calculated by the process in Step S4 (Step S5).

Next, the first update unit 141 and the second update unit 142 update the second neural network 102 (Step S6). More specifically, the first update unit 141 updates parameters of the second neural network 102 so that a distribution that represents features of the first translated data becomes similar to a distribution that represents features of the first domain data. Further, the second update unit 142 updates the second neural network 102 on the basis of the loss calculated by the process in Step S4.

Next, the update unit 14 determines whether or not the update process is iterated predetermined times (iteration number) (Step S7). If the update process is not iterated the predetermined times (Step S7, No), the process returns to Step S1. If the update process is iterated the predetermined times (Step S7, Yes), the process ends.

As described above, in the learning device 1 according to the first arrangement, the inference unit 13 uses the first neural network 101 to perform an inference task. The first neural network 101 receives first domain data and outputs a first inference result. The translation unit 12 uses the second neural network 102 to translate second domain data into first translated data. The second neural network 102 receives the second domain data, and translates the second domain data into the first translated data similar to the first domain data. The first update unit 141 updates parameters of the second neural network 102 so that a distribution that represents features of the first translated data becomes similar to a distribution that represents features of the first domain data. The second update unit 142 updates parameters of the first neural network 101 on the basis of a second inference result, a ground truth label of the first translated data, a first inference result, and a ground truth label of the first domain data. The second inference result is output from the first neural network 101 into which the first translated data is input.

Consequently, the learning device 1 according to the first arrangement generates learning data that is appropriate for improvement in generalization performance of the neural network used for estimation (first neural network 101). More specifically, the learning device 1 according to the first arrangement can simultaneously learn the first neural network 101 and the second neural network 102. For example, the first neural network 101 receives actual images and performs target inference tasks. For example, the second neural network 102 translates CGs or the like into domain data similar to the actual images. The CGs or the like allow generation of a plurality of labeled images. Consequently, images appropriate for improvement in generalization performance of an estimation network (first neural network 101) that estimates first domain images (actual images or the like) are generated from second domain images (CGs or the like). The generalization performance of the estimation network is improved.

Second Arrangement

Next, a second arrangement will be described. In the description of the second arrangement, description similar to the description in the first arrangement will be omitted, and points different from the first arrangement will be described.

Configuration Example of Neural Networks

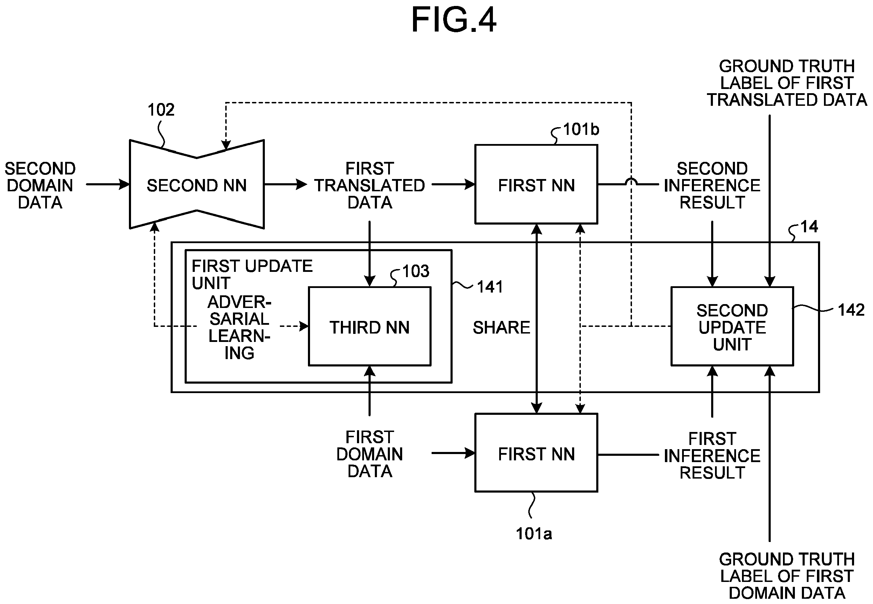

FIG. 4 is a diagram that illustrates a configuration example of neural networks according to the second arrangement. As illustrated in FIG. 4, a difference between the second arrangement and the first arrangement is that a first update unit 141 further uses a third neural network 103 to perform an update process.

The third neural network 103 receives input of first domain data or first translated data. The third neural network 103 determines whether or not the input is the first domain data (identifies whether the input is the first domain data or the first translated data).

The first update unit 141 uses the third neural network 103 to adversarially learn a second neural network 102 and the third neural network 103. Consequently, the first update unit 141 updates parameters of the second neural network 102 and the third neural network 103.

If the first domain data is input, the first update unit 141 updates the parameters of the third neural network 103 so that one is output. Alternatively, if the first translated data is input, the first update unit 141 updates the parameters of the third neural network 103 so that zero is output. Following Expression (2), for example, represents a loss $L_{dis}$ that should be minimized by updating the parameters of the third neural network 103.

$$L_{dis} = E(\log(D(x))) + E(\log(1 - D(y))) \qquad (2)$$

E() represents an expected value. x represents a set of input sampled from the first domain data. y represents a set of input sampled from the first translated data output from the second neural network 102 into which a set of input sampled from second domain data is input. D(x) represents output from the third neural network 103 into which x is input. D(y) represents output from the third neural network 103 into which y is input.

Further, the first update unit 141 updates the parameters of the second neural network 102 so that one is output from the third neural network 103 into which the first translated data is input. That is to say, the first update unit 141 updates the parameters so that the following loss $L_{gen}$ is minimized.

$$L_{gen} = E(log(D(y)))  \qquad (3)$$

Note that details of an adversarial learning method are described in, for example, SPLAT: Semantic Pixel-Level Adaptation Transforms for Detection (https://arxiv.org/pdf/1812.00929.pdf). Further, instead of above Expressions (2) and (3), a squared error may be minimized as in Expressions (4) and (5).

$$L_{dis} = E((1 - D(x))^2) + E((D(y))^2)  \qquad (4)$$

$$L_{gen} = E((1 - D(y))^2)  \qquad (5)$$

Note that expressions that define the losses are not limited to Expressions (2) to (5) that are presented herein. The losses may be defined by any expression as long as the losses can be adversarially learned.

Alternatively, when the second neural network 102 is trained, the update unit 14 (first update unit 141 and second update unit 142) may use following Expression (6) for the above Lgen and updates the parameters to minimize the $L_{gen}$.

$$L_{gen} = E((1 - D(y))^2) + c^*L  \qquad (6)$$

c is a predetermined constant. L is a loss of first neural networks 101a and 101b. The loss of the first neural networks 101a and 101b is defined by above Expression (1). Since the update unit 14 (first update unit 141 and second update unit 142) updates the parameters to minimize the $L_{gen}$, the second neural network 102 is trained while the loss of the first neural networks 101a and 101b is considered. Consequently, the second neural network 102 is trained so that the second neural network 102 can generate first translated data that improves generalization performance of the first neural networks 101a and 101b.

Example of Learning Method

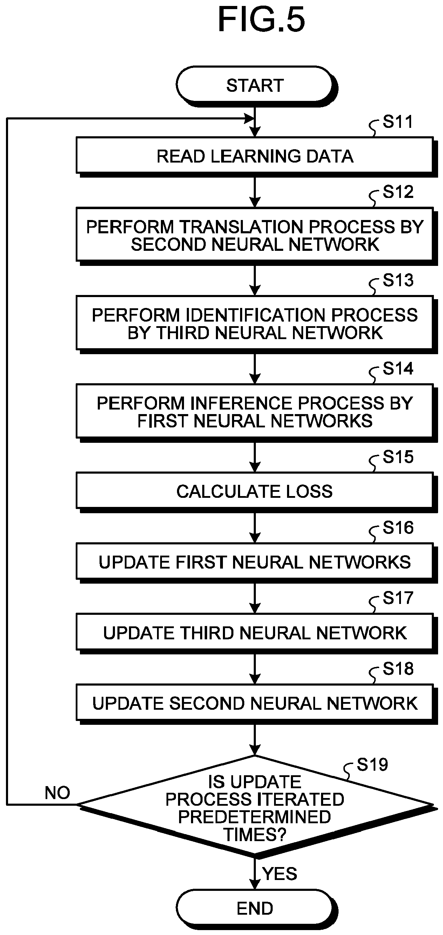

FIG. 5 is a flowchart that illustrates an example of a learning method according to the second arrangement. The descriptions for the processes in Step S11 and Step S12 are omitted since the processes in Step S11 and Step S12 are the same as the processes in Step S1 and Step S2 according to the first arrangement (see FIG. 3).

Next, the first update unit 141 uses the third neural network 103 to perform an identification process of first domain data and first translated data obtained by a translation process in Step S12 (Step S13). More specifically, the first update unit 141 inputs first translated data, and first domain data in a read batch into the third neural network 103, and obtains an output result.

Next, an inference unit 13 uses the first neural networks 101a and 101b to perform an inference process (Step S14). The first domain data in the read batch is input into the first neural network 101a. The first translated data that has been obtained in the process in Step S12 is input into the first neural network 101b.

Next, losses defined by above Expressions (1), (2), and (6) are calculated by the first update unit 141 and the second update unit 142 on the basis of results of the processes in Step S12 to Step S14 (Step S15).

Next, the second update unit 142 updates the first neural networks 101a and 101b on the basis of the loss calculated by above Expression (1) in the process in Step S15 (Step S16).

Next, the first update unit 141 updates the third neural network 103 on the basis of the loss calculated by above Expression (2) in the process in Step S15 (Step S17).

Next, the update unit 14 (first update unit 141 and second update unit 142) updates the second neural network 102 on the basis of the loss calculated by above Expression (6) in the process in Step S15 (Step S18).

Next, the update unit 14 determines whether or not the update process is iterated predetermined times (iteration number) (Step S19). If the update process is not iterated the predetermined times (Step S19, No), the process returns to Step S1. If the update process is iterated the predetermined times (Step S19, Yes), the process ends.

Variation of Second Arrangement

Next, a variation of the second arrangement will be described. In the description of the variation, description similar to the description in the second arrangement will be omitted, and points different from the second arrangement will be described. At least two or more neural networks of first neural networks 101a and 101b, a second neural network 102, and a third neural network 103 share at least part of weights.

Configuration Example of Neural Networks

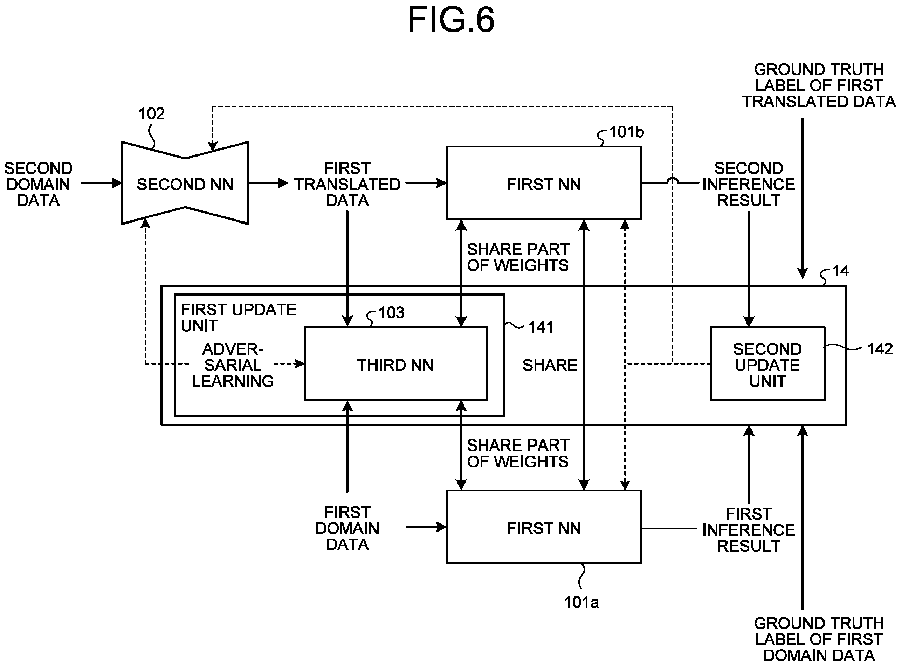

FIG. 6 is a diagram that illustrates a configuration example of neural networks according to the variation of the second arrangement. In the example in FIG. 6, the third neural network 103 and the first neural networks 101a and 101b share part of weights. In the example in FIG. 6, the shared weights are updated by both a first update unit 141 and a second update unit 142.

Third Arrangement

Next, a third arrangement will be described. In the description of the third arrangement, description similar to the description in the variation of the second arrangement will be omitted, and points different from the variation of the second arrangement will be described. A CycleGAN configuration is applied to the third arrangement.

Configuration Example of Neural Networks

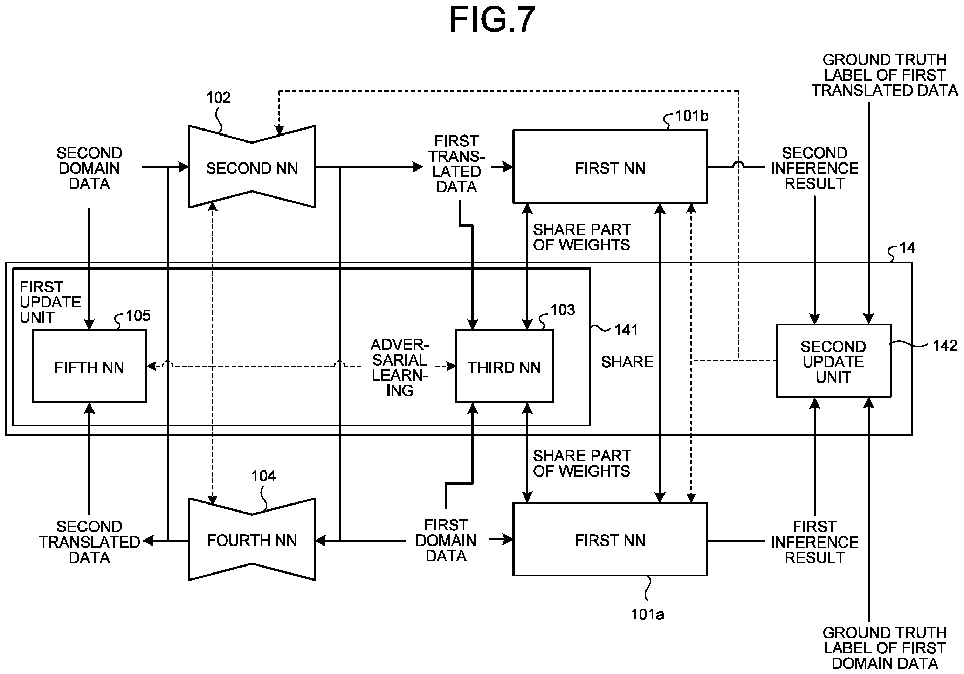

FIG. 7 is a diagram that illustrates a configuration example of neural networks according to the third arrangement. In the third arrangement, a fourth neural network 104 and a fifth neural network 105 are added, as illustrated in FIG. 7.
If the fourth neural network 104 receives input of first domain data, the fourth neural network 104 translates the first domain data into second translated data similar to second domain data, and outputs the second translated data.
The fifth neural network 105 receives input of the second domain data or the second translated data. The fifth neural network 105 determines whether or not the input is the second domain data (identifies whether the input is the second domain data or the second translated data).
In the configuration in FIG. 7, if the second domain data is input into the fifth neural network 105, a first update unit 141 updates parameters of the fifth neural network 105 so that one is output. Alternatively, if the second translated data is input into the fifth neural network 105, the first update unit 141 updates parameters of the fifth neural network 105 so that zero is output.
Further, the first update unit 141 updates parameters of a second neural network 102 and the fourth neural network 104 so that one is output from the fifth neural network 105 into which the second translated data is input.
That is to say, the first update unit 141 updates the parameters so that the following loss is minimized.

$$L_{dis} = E(\log(DB(x))) + E(\log(1 - DB(y))) \qquad (2')$$

DB(x) represents output from the fifth neural network 105. x represents a set of input sampled from the second domain data. y represents a set of input sampled from the second translated data output from the fourth neural network 104 into which a set of input sampled from the first domain data is input. Alternatively, instead of above Expression (2'), a squared error may be minimized as in Expression (4').

$$L_{dis} = E((1 - DB(x))^2) + E((DB(y))^2) \qquad (4')$$

Further, the first update unit 141 further updates the parameters of the second neural network 102 and the fourth neural network 104 so that output from the second neural network 102 into which the second translated data is input becomes the same as the first domain data. That is to say, the first update unit 141 updates the parameters so that the following loss is minimized.

$$L_{gen} = (E((1 - DA(y))^2) + E((1 - DB(GB(x)))^2))/2$$
$$+ \lambda E(||GA(GB(x)) - x||_1) \qquad\qquad (7)$$

DA(x) represents output from a third neural network 103 into which x is input. DB(x) represents output from the fifth neural network 105 into which x is input. Further, GB(x) represents output from the fourth neural network 104 into which x is input. GA(x) represents output from the second neural network 102 into which x is input. Further, $\lambda$ is a predetermined coefficient.

Note that details of such an adversarial learning method of translating a style of the first domain data and a style of the second domain data into each other are described in, for example, Jun-Yan Zhu, Taesung Park, Phillip Isola, Alexei A. Efros, "Unpaired Image-to-Image Translation using Cycle-Consistent Adversarial Networks" ICCV 2017.

Further, in the configuration in FIG. 7, the first domain data includes, for example, captured images. The second domain data includes, for example, CGs. The first translated data includes, for example, CGs similar to the captured images. The second translated data includes, for example, CGs translated from the captured images.

In the third arrangement, due to the above configuration in FIG. 7, a translation unit 12 uses the fourth neural network 104 to further translate first domain data into second translated data. The fourth neural network 104 receives the first domain data, and translates the first domain data into the second translated data similar to second domain data. Then the first update unit 141 uses the fifth neural network 105 to adversarially learn the fourth neural network 104 and the fifth neural network 105. Consequently, the first update unit 141 further updates parameters of the fourth neural network 104 and the fifth neural network 105. The fifth neural network 105 receives input of the second translated data or the second domain data, and determines whether or not the input is the second domain data. Further, the first update unit 141 further updates parameters of the second neural network 102 and the parameters of the fourth neural network 104, on the basis of the first domain data, and output from the second neural network 102 into which the second translated data is further input.

Example of Learning Method

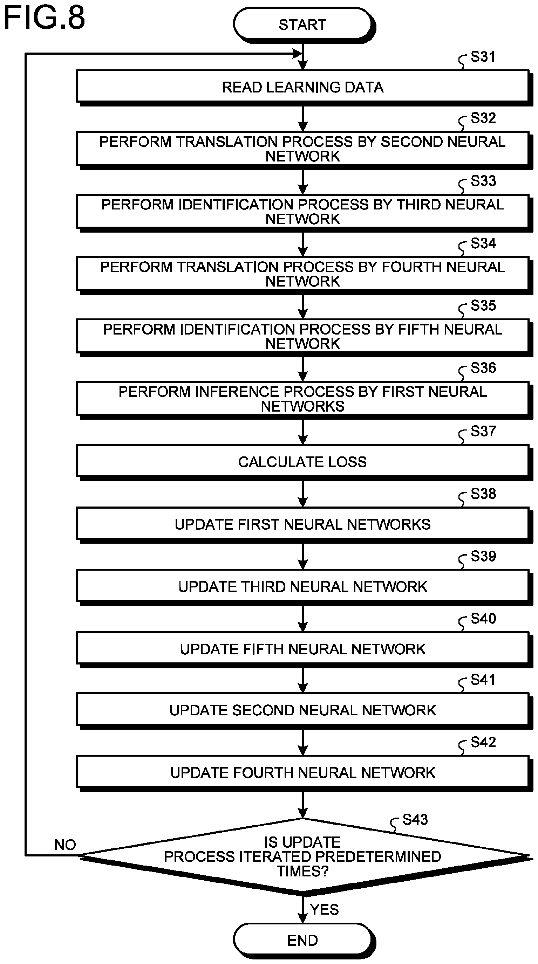

FIG. 8 is a flowchart that illustrates an example of a learning method according to the third arrangement. The descriptions for the processes in Step S31 to Step S33 are omitted since the processes in Step S31 to Step S33 are the same as the processes in Step S11 to Step S13 according to the second arrangement (see FIG. 5).

Next, the translation unit 12 uses the fourth neural network 104 to perform a translation process (Step S34). More specifically, the translation unit 12 inputs first domain data in a read batch into the fourth neural network 104 to generate second translated data.

Next, the first update unit 141 uses the fifth neural network 105 to perform an identification process of second domain data and first translated data obtained by the translation process in Step S34 (Step S35). More specifically, the first update unit 141 inputs the second translated data, and the first domain data in the read batch into the fifth neural network 105, and obtains an output result.

Next, an inference unit 13 uses first neural networks 101a and 101b to perform an inference process (Step S36). The first domain data in the read batch is input into the first neural network 101a. The first translated data that has been obtained in the process in Step S32 is input into the first neural network 101b.

Next, losses defined by above Expressions (1), (2), (2'), and (7) are calculated by the first update unit 141 and a second update unit 142 on the basis of results of the processes in Step S32 to Step S36 (Step S37).

Next, the second update unit 142 updates the first neural networks 101a and 101b on the basis of the loss calculated by above Expression (1) in the process in Step S37 (Step S38).

Next, the first update unit 141 updates the third neural network 103 on the basis of the loss calculated by above Expression (2) in the process in Step S37 (Step S39).

Next, the first update unit 141 updates the fifth neural network 105 on the basis of the loss calculated by above Expression (2') in the process in Step S37 (Step S40).

Next, the first update unit 141 updates the second neural network 102 on the basis of the loss calculated by above Expression (7) in the process in Step S37 (Step S41).

Next, the first update unit 141 updates the fourth neural network 104 on the basis of the loss calculated by above Expression (7) in the process in Step S37 (Step S42).

Next, the update unit 14 determines whether or not the update process is iterated predetermined times (iteration number) (Step S43). If the update process is not iterated the predetermined times (Step S43, No), the process returns to Step S1. If the update process is iterated the predetermined times (Step S43, Yes), the process ends.

Fourth Arrangement

Next, a fourth arrangement will be described. In the description of the fourth arrangement, description similar to the description in the third arrangement will be omitted, and points different from the third arrangement will be described.

Configuration Example of Neural Networks

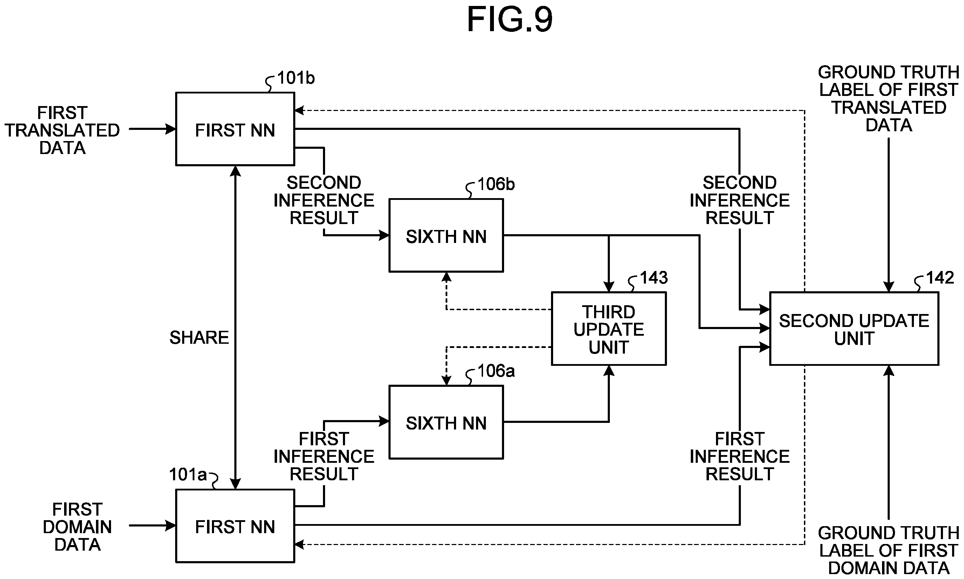

FIG. 9 is a diagram that illustrates a configuration example of neural networks according to the fourth arrangement. Note that in FIG. 9, sixth neural networks 106a and 106b are added between first neural networks 101a and 101b and a second update unit 142. Configurations of other portions of the fourth arrangement are the same as the configuration of the third arrangement (see FIG. 7).

As illustrated in FIG. 9, the sixth neural networks 106a and 106b are neural networks that identify (determine) whether input is a first inference result or a second inference result. As output of the sixth neural networks 106a and 106b becomes closer to, for example, one, the input is more likely to be the first inference result. The sixth neural networks 106a and 106b share at least part of or all of weights of the neural networks. If all parameters (weights) are shared between the sixth neural networks 106a and 106b, the sixth neural networks 106a and 106b are implemented as one sixth neural network 106.

A third update unit 143 updates parameters of the sixth neural networks 106a and 106b. The third update unit 143 receives output from the sixth neural networks 106a and 106b. The third update unit 143 updates the parameters of the sixth neural networks 106a and 106b so that the sixth neural network 106a outputs one and the sixth neural network 106b outputs zero. Following Expression (8) or (8'), for example, represents a loss $L_{dis}$ that should be minimized by updating the parameters of the sixth neural networks 106a and 106b.

$$L_{dis} = E(\log(DW(x))) + E(\log(1 - DW(y)))  \qquad (8)$$

$$L_{dis} = E((1 - DW(x))^2) + E((DW(y))^2)  \qquad (8')$$

E() represents an expected value. x represents a set of first inference results output from the first neural network 101a into which a set of input sampled from first domain data is input. y represents a set of second inference results output from the first neural network 101b into which output from a second neural network is input. The second neural network translates a set of input sampled from second domain data, and outputs the set of translated input. DW(x) represents output from the sixth neural networks 106a and 106b into which x is input. DW(y) represents output from the sixth neural networks 106a and 106b into which y is input.

Further, in the fourth arrangement, the second update unit 142 updates the first neural networks 101a and 101b on the basis of the first inference result, a ground truth label of the first domain data, the second inference result, and a ground truth label of first translated data, and output from the sixth neural network 106b. More specifically, as output from the sixth neural network 106b becomes closer to one, it is determined that the first inference result and the second inference result become closer. The first domain data (for example, actual images) is used for the first inference result. The first translated data (for example, data that includes images like actual images translated from CGs) is used for the second inference result. Therefore, if output from the sixth neural network 106b is not less than a predetermined threshold (for example, 0.5), the second update unit 142 updates parameters of the first neural networks 101a and 101b by using a loss calculated by the second update unit 142 (allows the loss to affect the first neural networks 101a and 101b).

Further, for example, the sixth neural networks 106a and 106b depthwise or pointwise divide output from the first neural networks 101a and 101b into at least one output. Alternatively, for example, the sixth neural networks 106a and 106b divide, on the basis of a set of output nodes, output from the first neural networks 101a and 101b into at least one output. Further, for example, the sixth neural networks 106a and 106b perform processes for each of the divided output.

In this case, a mean value of at least one output that corresponds to divided output may be determined. Parameters may be updated by allowing a loss calculated by the second update unit 142 to affect parts of output from the first neural networks 101a and 101b that are not less than the mean value. Alternatively, if parts of output from the sixth neural network 106b into which the divided output from the first neural networks 101a and 101b is input are not less than a predetermined threshold, parameters may be updated by allowing a loss calculated by the second update unit 142 to affect the parts of output from the sixth neural network 106b that are not less than the predetermined threshold.

Example of Learning Method

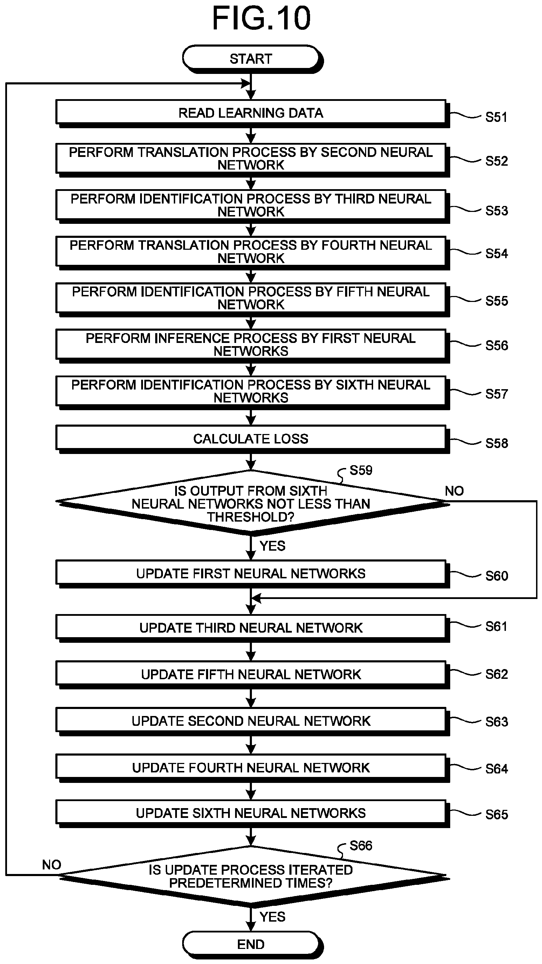

FIG. 10 is a flowchart that illustrates an example of a learning method according to the fourth arrangement. The descriptions for the processes in Step S51 to Step S56 are omitted since the processes in Step S51 to Step S56 are the same as the processes in Step S31 to Step S36 according to the third arrangement (see FIG. 8).

Next, the third update unit 143 uses the sixth neural networks 106a and 106b to perform an identification process of first and second inference results (Step S57).

Next, losses defined by above Expressions (1), (2), and (6) or (7), and (8) are calculated by a first update unit 141, the second update unit 142, and the third update unit 143 on the basis of results of the processes in Step S52 to Step S56 (Step S58).

Next, the second update unit 142 determines whether or not output from the sixth neural network 106b is not less than a threshold (for example, 0.5) (Step S59). If the output is not less than the threshold (Step S59, Yes), the process proceeds to Step S60. If the output is less than the threshold (Step S59, No), the process proceeds to Step S61.

The descriptions for the processes in Step S60 to Step S64 are omitted since the processes in Step S60 to Step S64 are the same as the processes in Step S38 to Step S42 according to the third arrangement (see FIG. 8).

Next, the third update unit 143 updates parameters of the sixth neural networks 106a and 106b (Step S65). More specifically, the third update unit 143 updates the sixth neural networks 106a and 106b on the basis of the loss calculated by above Expression (8) in the process in Step S58. That is to say, the third update unit 143 updates parameters of the sixth neural networks 106a and 106b so that the sixth neural network 106a outputs one and the sixth neural network 106b outputs zero.

Next, an update unit 14 determines whether or not the update process is iterated predetermined times (iteration number) (Step S66). If the update process is not iterated the predetermined times (Step S66, No), the process returns to Step S1. If the update process is iterated the predetermined times (Step S66, Yes), the process ends.

Note that the above processing functions of the learning device 1 according to the first to fourth arrangements are implemented by, for example, the learning device 1 that includes a computer and executes programs, as described above. In this case, programs executed by the learning device 1 according to the first to fourth arrangements may be stored in a computer connected through a network, such as the Internet, and may be provided by downloading the programs through the network. Alternatively, programs executed by the learning device 1 according to the first to fourth arrangements may be provided or distributed through a network, such as the Internet. Alternatively, programs executed by the learning device 1 according to the first to fourth arrangements may be preliminarily built into a non-volatile storage medium, such as read-only memory (ROM), and be provided.

While certain arrangements have been described, these arrangements have been presented by way of example only, and are not intended to limit the scope of the claims. Indeed, the devices described herein may be embodied in a variety of other forms; furthermore various omissions, substitutions and changes in the form of the devices described herein may be made.

**Claims**

1. A learning device (1) comprising:

   an inference unit (13) configured to perform an inference task by using a first neural network (101a, 101b), the first neural network being configured to receive first domain data and output a first inference result;
   a translation unit (12) configured to translate second domain data into first translated data similar to the first domain data by using a second neural network (102), the second neural network being configured to receive the second domain data and translate the second domain data into the first translated data;
   a first update unit (141) configured to update parameters of the second neural network (102) so that a distribution that represents a feature of the first translated data approaches a distribution that represents a feature of the first domain data; and
   a second update unit (142) configured to update parameters of the first neural network (101a, 101b) on a basis of a second inference result output when the first translated data is input into the first neural network, a ground truth label of the first translated data, the first inference result, and a ground truth label of the first domain data.

2. The learning device (1) according to claim 1, wherein
   the first update unit (141) is configured to perform, using a third neural network (103), adversarial learning on the second and third neural networks (102, 103) to update the parameters of the second and third neural networks, the third neural network (103) being configured to receive input of the first domain data or the first translated data and to determine whether or not the input is the first domain data.

3. The learning device (1) according to claim 2, wherein
at least two or more neural networks of the first to third neural networks (101a, 101b, 102, 103)share at least part of weights.

4. The learning device (1) according to claim 1 or 2, wherein
the second update unit (142) is configured to further update the parameters of the second neural network (102) on a basis of the second inference result, the ground truth label of the first translated data, the first inference result, and the ground truth label of the first domain data.

5. The learning device (1) according to any one of claims 1 to 4, wherein
the translation unit (12) is configured to further translate, using a fourth neural network (104), the first domain data into second translated data similar to the second domain data, the fourth neural network (104) being configured to receive the first domain data and translate the first domain data into the second translated data, and
the first update unit (141) is configured to perform, using a fifth neural network (105), adversarial learning on the fourth and fifth neural networks (104, 105) to further update parameters of the fourth and fifth neural networks, and is configured to further update the parameters of the second and fourth neural networks (102, 104) on a basis of the first domain data and output when the second translated data is further input into the second neural network (102), the fifth neural network (105) being configured to receive input of the second translated data or the second domain data and determine whether or not the input is the second domain data.

6. The learning device (1) according to claim 5, wherein
the first domain data includes a captured image,
the second domain data includes a computer graphic (CG),
the first translated data includes a CG similar to the captured image, and
the second translated data includes a CG translated from the captured image.

7. The learning device (1) according to any one of claims 1 to 6, further comprising
a third update unit configured to update parameters of a sixth neural network (106a, 106b), the sixth neural network being configured to receive input of the first or second inference result and determine whether or not the input is the first inference result,
wherein the second update unit (142) is configured to determine whether or not the parameters of the first neural network (101a, 101b) will be updated, on a basis of output from the sixth neural network (106a, 106b) into which the second inference result is input.

8. A learning method comprising:

performing an inference task by using a first neural network (101a, 101b) (S3), the first neural network being configured to receive first domain data and output a first inference result;
translating second domain data into first translated data similar to the first domain data by using a second neural network (102) (S2), the second neural network being configured to receive the second domain data and translate the second domain data into the first translated data;
updating parameters of the second neural network (102) so that a distribution that represents a feature of the first translated data approaches a distribution that represents a feature of the first domain data (S6); and
updating parameters of the first neural network (101a, 101b) on a basis of a second inference result output when the first translated data is input into the first neural network (101a, 101b), a ground truth label of the first translated data, the first inference result, and a ground truth label of the first domain data (S5).

9. A computer-readable medium comprising instructions which, when executed by a computer (10), cause the computer (10) to perform:

performing an inference task by using a first neural network (101a, 101b) (S3), the first neural network being configured to receive first domain data and output a first inference result;
translating second domain data into first translated data similar to the first domain data by using a second neural network (102) (S2), the second neural network being configured to receive the second domain data and translate the second domain data into the first translated data;
updating parameters of the second neural network (102) so that a distribution that represents a feature of the first translated data approaches a distribution that represents a feature of the first domain data (S6); and
updating parameters of the first neural network (101a, 101b) on a basis of a second inference result output when the first translated data is input into the first neural network, a ground truth label of the first translated data, the first inference result, and a ground truth label of the first domain data (S5).

# FIG.1

LEARNING DEVICE

⌐1

⌐40

PROCESSING CIRCUIT ⌐10

⌐20
STORAGE CIRCUIT

⌐30
COMMUNICA-TION UNIT

OBTAINING UNIT ⌐11

TRANSLATION UNIT ⌐12

INFERENCE UNIT ⌐13

UPDATE UNIT ⌐14

# FIG.2

# FIG.3

```
              ┌─────────────┐
              │    START    │
              └──────┬──────┘
                     │                      ⌐S1
          ┌──────────▼──────────────────┐
     ┌───►│     READ LEARNING DATA       │
     │    └──────────┬──────────────────┘
     │               │                      ⌐S2
     │    ┌──────────▼──────────────────┐
     │    │ PERFORM TRANSLATION PROCESS BY│
     │    │    SECOND NEURAL NETWORK      │
     │    └──────────┬──────────────────┘
     │               │                      ⌐S3
     │    ┌──────────▼──────────────────┐
     │    │  PERFORM INFERENCE PROCESS BY │
     │    │    FIRST NEURAL NETWORKS      │
     │    └──────────┬──────────────────┘
     │               │                      ⌐S4
     │    ┌──────────▼──────────────────┐
     │    │       CALCULATE LOSS          │
     │    └──────────┬──────────────────┘
     │               │                      ⌐S5
     │    ┌──────────▼──────────────────┐
     │    │  UPDATE FIRST NEURAL NETWORKS │
     │    └──────────┬──────────────────┘
     │               │                      ⌐S6
     │    ┌──────────▼──────────────────┐
     │    │  UPDATE SECOND NEURAL NETWORK │
     │    └──────────┬──────────────────┘
     │               │                      ⌐S7
     │           ◇───▼───◇
     │  NO      ╱ IS UPDATE ╲
     └─────────╱  PROCESS ITERATED ╲
              ╲  PREDETERMINED  ╱
               ╲    TIMES?    ╱
                ◇─────┬─────◇
                      │ YES
              ┌───────▼──────┐
              │     END      │
              └──────────────┘
```

READ LEARNING DATA — S1

PERFORM TRANSLATION PROCESS BY SECOND NEURAL NETWORK — S2

PERFORM INFERENCE PROCESS BY FIRST NEURAL NETWORKS — S3

CALCULATE LOSS — S4

UPDATE FIRST NEURAL NETWORKS — S5

UPDATE SECOND NEURAL NETWORK — S6

IS UPDATE PROCESS ITERATED PREDETERMINED TIMES? — S7

# FIG.4

EP 3 846 084 A1

# FIG.5

START

S11

READ LEARNING DATA

S12

PERFORM TRANSLATION PROCESS BY
SECOND NEURAL NETWORK

S13

PERFORM IDENTIFICATION PROCESS
BY THIRD NEURAL NETWORK

S14

PERFORM INFERENCE PROCESS BY
FIRST NEURAL NETWORKS

S15

CALCULATE LOSS

S16

UPDATE FIRST NEURAL NETWORKS

S17

UPDATE THIRD NEURAL NETWORK

S18

UPDATE SECOND NEURAL NETWORK

S19

NO — IS UPDATE
PROCESS ITERATED
PREDETERMINED
TIMES?

YES

END

# FIG.6

SECOND DOMAIN DATA → 102 SECOND NN → FIRST TRANSLATED DATA → 101b FIRST NN → SECOND INFERENCE RESULT

GROUND TRUTH LABEL OF FIRST TRANSLATED DATA

SHARE PART OF WEIGHTS

FIRST UPDATE UNIT
ADVER-SARIAL LEARNING

103 THIRD NN

141
SHARE

14

SECOND UPDATE UNIT

142

SHARE PART OF WEIGHTS

FIRST DOMAIN DATA → 101a FIRST NN → FIRST INFERENCE RESULT

GROUND TRUTH LABEL OF FIRST DOMAIN DATA

EP 3 846 084 A1

# FIG.7

GROUND TRUTH LABEL OF FIRST TRANSLATED DATA

SECOND INFERENCE RESULT

14

142

SECOND UPDATE UNIT

FIRST INFERENCE RESULT

GROUND TRUTH LABEL OF FIRST DOMAIN DATA

101b — FIRST NN

101a — FIRST NN

FIRST TRANS-LATED DATA

SHARE PART OF WEIGHTS

103 — THIRD NN

141 SHARE

SHARE PART OF WEIGHTS

FIRST DOMAIN DATA

ADVER-SARIAL LEARN-ING

102 — SECOND NN

104 — FOURTH NN

SECOND DOMAIN DATA

105 — FIFTH NN

FIRST UPDATE UNIT

SECOND TRANSLATED DATA

# FIG.8

START

S31
READ LEARNING DATA

S32
PERFORM TRANSLATION PROCESS BY SECOND NEURAL NETWORK

S33
PERFORM IDENTIFICATION PROCESS BY THIRD NEURAL NETWORK

S34
PERFORM TRANSLATION PROCESS BY FOURTH NEURAL NETWORK

S35
PERFORM IDENTIFICATION PROCESS BY FIFTH NEURAL NETWORK

S36
PERFORM INFERENCE PROCESS BY FIRST NEURAL NETWORKS

S37
CALCULATE LOSS

S38
UPDATE FIRST NEURAL NETWORKS

S39
UPDATE THIRD NEURAL NETWORK

S40
UPDATE FIFTH NEURAL NETWORK

S41
UPDATE SECOND NEURAL NETWORK

S42
UPDATE FOURTH NEURAL NETWORK

S43
NO
IS UPDATE PROCESS ITERATED PREDETERMINED TIMES?

YES

END

# FIG.9

FIRST TRANSLATED DATA

FIRST NN  101b

GROUND TRUTH LABEL OF FIRST TRANSLATED DATA

SECOND INFERENCE RESULT

SIXTH NN  106b

SECOND INFERENCE RESULT

THIRD UPDATE UNIT  143

SECOND UPDATE UNIT  142

SHARE

FIRST DOMAIN DATA

FIRST NN  101a

FIRST INFERENCE RESULT

SIXTH NN  106a

FIRST INFERENCE RESULT

GROUND TRUTH LABEL OF FIRST DOMAIN DATA

EP 3 846 084 A1

# FIG.10

START

READ LEARNING DATA — S51

PERFORM TRANSLATION PROCESS BY SECOND NEURAL NETWORK — S52

PERFORM IDENTIFICATION PROCESS BY THIRD NEURAL NETWORK — S53

PERFORM TRANSLATION PROCESS BY FOURTH NEURAL NETWORK — S54

PERFORM IDENTIFICATION PROCESS BY FIFTH NEURAL NETWORK — S55

PERFORM INFERENCE PROCESS BY FIRST NEURAL NETWORKS — S56

PERFORM IDENTIFICATION PROCESS BY SIXTH NEURAL NETWORKS — S57

CALCULATE LOSS — S58

S59

IS OUTPUT FROM SIXTH NEURAL NETWORKS NOT LESS THAN THRESHOLD?  — NO

YES

UPDATE FIRST NEURAL NETWORKS — S60

UPDATE THIRD NEURAL NETWORK — S61

UPDATE FIFTH NEURAL NETWORK — S62

UPDATE SECOND NEURAL NETWORK — S63

UPDATE FOURTH NEURAL NETWORK — S64

UPDATE SIXTH NEURAL NETWORKS — S65

S66

NO — IS UPDATE PROCESS ITERATED PREDETERMINED TIMES?

YES

END

Europäisches
Patentamt

European
Patent Office

Office européen
des brevets

# EUROPEAN SEARCH REPORT

**Application Number**

EP 20 19 5099

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BYUNGIN YOO ET AL: "Joint Learning of Generative Translator and Classifier for Visually Similar Classes", ARXIV.ORG, CORNELL UNIVERSITY LIBRARY, 201 OLIN LIBRARY CORNELL UNIVERSITY ITHACA, NY 14853, 15 December 2019 (2019-12-15), XP081559199, * page 2 - page 4; figure 2 * | 1-9 | INV. G06N3/04 |
| X | BOUSMALIS KONSTANTINOS ET AL: "Unsupervised Pixel-Level Domain Adaptation with Generative Adversarial Networks", 2017 IEEE CONFERENCE ON COMPUTER VISION AND PATTERN RECOGNITION (CVPR), IEEE COMPUTER SOCIETY, US, 21 July 2017 (2017-07-21), pages 95-104, XP033249344, ISSN: 1063-6919, DOI: 10.1109/CVPR.2017.18 [retrieved on 2017-11-06] * sections 3-4; figure 2 * | 1-9 | |
| A | MING-YU LIU ET AL: "Coupled Generative Adversarial Networks", ARXIV.ORG, CORNELL UNIVERSITY LIBRARY, 201 OLIN LIBRARY CORNELL UNIVERSITY ITHACA, NY 14853, 24 June 2016 (2016-06-24), XP080710596, * section 3 * | 1-9 | |

**TECHNICAL FIELDS SEARCHED (IPC)**

G06N

The present search report has been drawn up for all claims

| Place of search | Date of completion of the search | Examiner |
|---|---|---|
| Munich | 24 March 2021 | Cordara, Giovanni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JUN-YAN ZHU ; TAESUNG PARK ; PHILLIP ISOLA ; ALEXEI A. EFROS.** Unpaired Image-to-Image Translation using Cycle-Consistent Adversarial Networks. *ICCV 2017*
- **A. RADFORD ; L. METZ ; S. CHINTALA.** Unsupervised representation learning with deep convolutional generative adversarial networks. *In ICLR,* 2016
- Image-to-Image Translation with Conditional Adversarial Nets. **PHILLIP ISOLA ; JUN-YAN ZHU ; TINGHUI ZHOU ; ALEXEI A. EFROS.** CVPR2017. University of California
- **JUN-YAN ZHU ; TAESUNG PARK ; PHILLIP ISOLA ; ALEXEI A. EFROS.** Unpaired Image-to-Image Translation using Cycle-Consistent Adversarial Networks. *ICCV,* 2017